# EUROPÄISCHE PATENTSCHRIFT

(11) **EP 2 116 437 B1**
(45) Veröffentlichungstag und Bekanntmachung des Hinweises auf die Patenterteilung: **03.01.2018**
(21) Anmeldenummer: 09000393.0
(22) Anmeldetag: 14.01.2009
(51) Int. Cl.: B60T 13/68, B60T 15/02, B60T 8/36, F16K 31/06

(54) **Schaltmagnetventil**
Switching magnetic valve
Soupape à aimant de commutation

(30) Priorität: 09.04.2008 DE 102008017852
(43) Veröffentlichungstag der Anmeldung: 11.11.2009
(73) Patentinhaber: WABCO GmbH, 30453 Hannover (DE)
(72) Erfinder: Fuhrmann, Ingo, 30855 Langenhagen (DE); Menze, Wilfried, 31832 Springe (DE); Müller, Thomas, 30655 Hannover (DE); Riediger-Janisch, Karl-Heinz, 30455 Hannover (DE); Rovira-Rifaterra, Juan, 30827 Garbsen (DE); Schappler, Hartmut, 30455 Hannover (DE); Teichmann, Andreas, 30916 Isernhagen (DE)

(56) Entgegenhaltungen:
- EP-A2- 1 313 110
- DE-A1- 2 628 190
- DE-A1- 3 200 014
- DE-A1- 10 120 320
- DE-A1- 19 609 222
- DE-A1-102006 003 857

## Beschreibung

Die vorliegende Erfindung betrifft ein Schaltmagnetventil, insbesondere als Vorsteuerventil zum Erzeugen und Steuern eines Steuerdrucks in einem Druckluftbremssystem eines Fahrzeugs, umfassend einen ersten Kanal zum Zu- oder Abführen von Druckluft in das oder aus dem Schaltmagnetventil, einen zweiten Kanal zum Zu- oder Abführen von Druckluft in das oder aus dem Schaltmagnetventil, eine Ventilkammer umfassend einen Ventilsitz zum wahlweisen Freigeben und Unterbrechen des Druckluftstroms, und einen Ventilkern mit einer Durchgangsbohrung zum Durchleiten der Druckluft und einer äußeren Mantelfläche.

Vorsteuerventile werden zur Druckbetätigung eines größeren Ventils eingesetzt, beispielsweise eines Wegeventils eines Bremssystems. Die Steuerung des Steuerdrucks kann sowohl kontinuierlich als auch stufenweise erfolgen. Vorsteuerventile können als Druckreduzierventile oder Schaltventile ausgeführt sein. Oftmals ist das Vorsteuerventil elektromagnetisch betätigbar und ist mit dem Wegeventil zu einer Baueinheit zusammengefasst. Das Wegeventil kann auch über zwei oder mehr Vorsteuerventile angesteuert werden. Häufig ist dann ein Vorsteuerventil manuell betätigbar, etwa durch ein Stößel eines Bremspedals. Entsprechende Anordnungen ermöglichen den Aufbau eines Redundanzkreises, weil dann das Bremssystem auch dann noch funktionsfähig ist, wenn wegen eines Defekts der elektrischen Anlage der Elektromagnet des elektromagnetisch betätigbaren Vorsteuerventils nicht mehr aktiviert werden kann. In diesem Fall muss gewährleistet sein, dass der gesamte in einem pneumatischen Vorratsbehälter vorgehaltene Betriebsdruck auch in das Bremssystem eingeleitet werden kann. Um eine derartige Redundanz zu erzeugen, sind verschiedene Schaltlogiken bekannt, die im wesentlichen aus verschiedenen Kombinationen von stromlos offenen (auch engl.: "normally open, NO) und stromlos geschlossenen (auch engl.:: "normally closed", NC) Vorsteuerventilen bestehen. Die stromlos offenen Ventile dienen beispielsweise dafür, dass der Betriebsdruck im Falle eines Defekts der Elektronik in das Bremssystem geleitet werden kann, stromlos geschlossene Ventile werden beispielsweise dann eingesetzt, das Bremssystem funktionierender Elektronik zu entlüften und beispielsweise den Redundanzdruck auszukoppeln.

Aus der DE 101 20 320 B4 ist ein vorgesteuertes Ventil, insbesondere elektropneumatisches Regelventil für ein Druckluftbremssystem eines Fahrzeuges, mit einem Relaisventilgehäuse, in dem ein axial verstellbarer Steuerkolben innerhalb einer korrespondierenden Steuerkammer zur Betätigung einer den Druckluftfluss zwischen zumindest einem außen liegenden Bremsleitungsanschluss, einem Speisedruckanschluss sowie einem Entlüftungsanschluss schaltenden Ventilsitzanordnung angeordnet ist, bekann. Der Steuerkolben ist über eine elektromagnetische Vorsteuerventilanordnung, bestehend aus mindestens einem Auslassventil, einem Einlassventil und einem Backupventil, zur Axialverstellung bewegbar, die gemeinsam in einem mit dem Relaisventilgehäuse verbundenen Vorsteuerventilgehäuse untergebracht sind. Bei diesem Vorsteuerventil ist das als 2M-Wegeventil ausgebildete Backupventil über einen koaxial innerhalb eines zugeordneten Ventilkerns angeordneten Arbeitskanal einerseits mit dem Randbereich der Steuerkammer verbunden und mündet andererseits seitlich in eine ventilinterne Ventilkammer ein. Weiterhin ist ein teilweise neben dem Arbeitskanal im Ventilkern verlaufender Speisekanal vorgesehen ist, der einerseits koaxial in die ventilinterne Ventilkammer mündet und andererseits über eine am Ventilkern außenradial vorgesehene Öffnung mit Steuerdruckluft versorgbar.

EP 1 313 110 A2 betrifft einen Elektromagneten mit einem hohlzylindrischen Spulenkörper, der zumindest eine Spulenwicklung trägt und von einem Magnetgehäuse umschlossen wird. Der Spulenkörper wird stirnseitig von einem oberen Polschuh und einem unteren Polschuh begrenzt und weist in seinem Hohlzylinder ein nicht magnetisierbares Metallrohr auf, dessen Hohlraum als Ankerraum für einen Magnetanker ausgebildet ist. Der Magnetanker teilt den Ankerraum in eine erste Kammer und eine zweite Kammer, die über einen Druckausgleichkanal im Magnetanker miteinander verbunden sind. Über eine durch eine Axialbohrung im unteren Polschuh hindurch geführte Stößelstange steht der Magnetanker darüber hinaus mit einem Steuerkolben eines hydraulischen Ventils in Verbindung, dessen Innenraum über einen weiteren Druckausgleichskanal im unteren Polschuh mit der ersten Kammer des Ankerraumes verbunden ist.

DE 196 09 222 A1 offenbart ein Anhängersteuerventil mit Steuerkolben zum Betätigen eines Doppelsitzventils mit dem die Verbindung zwischen einem Druckluftvorrat, einem Druckluftverbraucher und einer Druckentlastungsstelle steuerbar ist. Zur konstruktiven Vereinfachung des Anhängersteuerventils ist ein einem elektrischen Steuerkreis und einem pneumatischen Steuerkreis einer Betriebsbremsanlage gemeinsam zugeordneter Steuerkolben vorgesehen. Des Weiteren ist ein an den pneumatischen Steuerkreis der Betriebsbremsanlage angeschlossenes Ventil vorgesehen, welches bei wirksamem elektrischem Steuerkreis den pneumatischen Steuerkreis der Betriebsbremsanlage gegen das Anhängersteuerventil absperrt und bei ausgefallenem elektrischem Steuerkreis den pneumatischen Steuerkreis der Betriebsbremsanlage freigibt.

DE 26 28 190 offenbart ein Elektromagnet, wobei ein Rohr mit einem offenen und einem geschlossenen Ende ist zur Aufnahme eines Polstückes vorgesehen ist, welches einen zentralen Kanal aufweist und in dem offenen Ende befestigt ist, wobei ein Stößelstift in dem zentralen Kanal beherbergt wird.

In dem Rohr sitzt ein Anker im Gleitsitz und kann sich zu und von dem Polstück als Zugelement und dem Stößelstift bewegen.

Eine erregbare Spule umgibt das Rohr. Ein magnetisch permeables Gehäuse, welches die Spule und das Rohr umgibt, besteht aus mehreren Abschnitten, die nur einen geringen Abstand voneinander aufweisen und in Umfangsrichtung um das Rohr und die Spule angeordnet sind, sowie eine gesamte magnetische Reluktanz aufweisen, die im wesentlichen den gleichen Wert wie die Reluktanz der Polstücke aufweisen. Eine Befestigungseinrichtung sichert die Abschnitte in ihrer Lage um das Rohr und die Spule.

Nachteilig bei derartigen Lösungen ist, dass die Anordnung der Arbeits- und Speisekanäle im Ventilkern kompliziert und aufwendig zu fertigen ist, wodurch die Herstellkosten des Vorsteuerventils recht hoch sind. Dies ist insbesondere vor dem Hintergrund zu sehen, dass die Ventilkerne sehr klein und die Kanäle daher sehr schwer zu bohren sind, insbesondere, wenn diese lang und nicht konzentrisch angeordnet sind und einen geringen Durchmesser aufweisen. Weiterhin nachteilig ist, dass die zum Rückstellen des Magnetankers verwendeten Federn den magnetischen Fluss zwischen der Spule und dem Magnetanker stört, wodurch die Effizienz des Ventils herabgesetzt wird. Dies kann sich einerseits in einer langsameren Reaktionszeit auswirken, anderseits können stärkere Spule vorgesehen werden, die aber wiederum mehr Bauraum erfordern.
Aufgabe der vorliegenden Erfindung ist es daher, ein Schaltmagnetventil, insbesondere als Vorsteuerventil der eingangs genannten Art anzugeben, bei welchem die Fertigung des Ventilkerns bei gleichzeitiger Minimierung des benötigten Bauraums vereinfacht wird und damit kostengünstiger erfolgen kann. Ferner soll der magnetische Fluss innerhalb des Schaltmagnetventils verbessert werden, ohne dass hierzu mehr Bauraum benötigt wird.
Die Erfindung löst die Aufgabe dadurch, dass die Ventilkammer einen Strömungskanal für Druckluft benachbart zur äußeren Mantelfläche des Ventilkerns aufweist. Durch diesen Strömungskanal wird bei geöffneter Ventilstellung eine Verbindung zwischen den Kanälen zum Zu- bzw. Abführen der Druckluft hergestellt. Der Strömungskanal lässt sich einfach herstellen, insbesondere im Vergleich zu aus dem Stand der Technik bekannten Schrägbohrungen.

Vorzugsweise ist der Strömungskanal durch mindestens eine Ausnehmung auf der äußeren Mantelfläche des Ventilkerns gebildet. Die Ausnehmung ist vorzugsweise eine axial an dem Ventilkern verlaufende Nut. Sie kann jede beliebige Form haben, beispielsweise U- oder V-förmig und sich ganz oder teilweise über die Mantelfläche erstrecken. Die Fertigung dieser Ausnehmungen ist deutlich einfacher und kostengünstiger. Durch die Anzahl und die Größe der Ausnehmungen kann das Volumen der Ventilkammer einfach an die entsprechenden Anwendungen angepasst werden. Enge Toleranzen bezüglich der Lage oder der Größe sind nicht einzuhalten. Die Fertigung des Ventilkerns geht schneller vonstatten und wird daher deutlich günstiger, wodurch sich auch die Gesamtkosten des Vorsteuerventils reduzieren.

Eine weiterhin vorteilhafte Ausführungsform, bei der das Ankerführungsrohr eine innere Mantelfläche aufweist, ist dadurch gekennzeichnet, dass der Strömungskanal durch mindestens eine Vertiefung auf einer Innenfläche des Ankerführungsrohres gebildet ist. Die Druckluft kann in dieser Ausführungsform nicht nur über den durch die Ausnehmung auf der äußeren Mantelfläche des Ventilkerns gebildeten Strömungskanal geleitet werden, sondern auch über Ausnehmungen, die sich auf der Innenfläche des Ankerführungsrohres befinden. Auf diese Weise kann das für die Durchleitung der Druckluft zur Verfügung stehende Volumen vergrößert und Strömungsgeschwindigkeiten und Druckverhältnisse individuell auf den jeweiligen Anwendungsfall angepasst werden. Alternativ kann der Strömungskanal auch nur durch Ausnehmungen im Ankerführungsrohr ausgebildet sein. In diesem Fall braucht der Ventilkern nur mit einer zentrischen Bohrung versehen zu werden, wodurch sich seine Fertigung weiter vereinfacht. In dem Bereich, in dem der Strömungskanal vorzusehen ist, kann ein derartiges Material verwendet werden, welches sich für die Fertigung der Ausnehmungen besonders eignet.

Eine vorteilhafte Ausbildung der Erfindung, welche in einen ersten und einen zweiten Abschnitt unterteilbar ist, zeichnet sich dadurch aus, dass der erste und der zweite Kanal im selben Abschnitt des Schaltmagnetventils benachbart zueinander angeordnet sind. Eine derartige Ausgestaltung ermöglicht es, weitere Vorsteuerventile zu einer kompakten Baueinheit zusammenzufassen, so dass auch komplexere Schaltlogiken in räumlich begrenzten Umfeldern realisiert werden können. Dadurch dass die Kanäle bzw. deren Ein- und Ausgänge nah beieinander im selben Abschnitt der verwendeten Schaltmagnetventile angeordnet sind, braucht nur dieser Abschnitt von einer Seite frei zugänglich zu sein, um die Ein- und Ausgänge an die entsprechenden Leitungen anzuschließen. Bei den aus dem Stand der Technik bekannten Ventilen sind Ein- und Ausgänge üblicherweise auf deren gegenüberliegenden Enden relativ weit voneinander beabstandet angeordnet. In vielen Fällen mündet der Zufuhrkanal direkt in den Ventilsitz, welcher sich über einem ersten Ende des Ventilkerns befindet.

Der Auslasskanal beginnt bei derartigen Ventilen am anderen Ende des Ventilkerns, so dass Zufuhr- und Auslasskanäle mindestens um die Länge des Ventilkerns voneinander beabstandet sind.

Eine vorteilhafte Fortbildung des Schaltmagnetventils, welches einen axial verstellbaren Magnetanker und eine elektrische Spule zum Verstellen des Magnetankers umfasst, zeichnet sich durch ein Ankerführungsrohr zum Führen des Magnetankers, das aus einem ersten und einem zweiten oder weiteren Materialien besteht. Die Verwendung von Ankerführungsrohren ist insofern vorteilhaft, als dass sie mit Oberflächen versehen werden können, die gute Laufeigenschaften aufweisen, so dass sich der Magnetanker mit reduzierter Reibung bewegen kann, wodurch die Reaktionszeit des Ventils erhöht und die für die Erzeugung der Bewegung des Magnetankers benötigte Kraft reduziert und der Verschleiß minimiert werden kann. Grundsätzlich könnte der Magnetanker direkt im Spulenkörper der elektrischen Spule gelagert werden, der ebenfalls mit Oberflächen versehen sein kann, die gute Laufeigenschaften besitzen. Allerdings wäre die Fertigung sehr aufwendig, so dass eine derartige Ausgestaltung wirtschaftlich nicht sinnvoll erscheint. Die Verwendung von zwei oder mehr Materialien eröffnet die Möglichkeit, das Ankerführungsrohr zielgerichtet an die Anforderungen anzupassen, die in dem jeweiligen Abschnitt zu erfüllen sind.

In vorteilhafter Weise weitergebildet wird die vorliegende Erfindung dadurch, dass das erste Material zumindest abschnittsweise im wesentlichen im Bereich des Magnetankers und das zweite Material im wesentlichen im Bereich des Ventilkerns angeordnet sind. Die Anforderungen an das Ankerführungsrohr in den Bereichen des Magnetankers und des Ventilkerns unterscheiden sich voneinander. Beispielsweise ist der Bereich, in dem sich der Magnetanker befindet, nicht oder zumindest nicht so stark dem Einfluss der Druckluft ausgesetzt; andererseits finden im Bereich, in dem sich der Ventilkern befindet, keine Relativbewegungen statt. Durch das Vorsehen verschiedener Materialien kann zielgerichtet auf die unterschiedlichen Anforderungen reagiert werden.

Eine besonders vorteilhafte Ausbildung der vorliegenden Erfindung verwendet als erstes Material einen austenitischen Stahl oder Messing zur Vermeidung eines magnetischen Kurzschlusses und als zweites Material einen ferritischen Stahl zur Ausbildung eines Magnetkreises innerhalb des Schaltmagnetventils. Messing oder austenitische Stähle sind nicht magnetisierbar, während sich ferritische Stähle gut magnetisieren lassen. Durch die Verwendung zweier oder mehr Materialien im Ankerführungsrohr kann der magnetische Fluss so gerichtet werden, dass er im Wesentlichen nur den Ventilkern und den Magnetanker durchfließt. Somit wirkt die durch den magnetischen Fluss erzeugte Magnetkraft nur zwischen dem Ventilkern und dem Magnetanker. Auf diese Weise kann vermieden werden, dass der magnetische Fluss das Ankerführungsrohr durchfließt und ein magnetischer Kurzschluss erzeugt wird, also der Magnetfluss am Magnetanker und am Ventilkern vorbeifließt. Der erzeugte magnetische Fluss wird so gelenkt, dass Verluste minimiert werden. Der Luftspalt zwischen Magnetanker und Ventilkern sollte vorzugsweise von austenitischem Stahl umgeben sein, damit der magnetische Fluss in seiner Richtung nicht abgelenkt wird.

Vorteilhafterweise weist das Schaltmagnetventil mindestens eine Jochbuchse zum Verstärken des magnetischen Flusses auf. Wie oben bereits geschildert, ist es zum Leiten des magnetischen Flusses innerhalb des Magnetankers vorteilhaft, wenn um den Magnetanker herum ein austenitischer Stahl angeordnet ist. Allerdings wird durch die geringe magnetische Permeabilität des austenitischen Stahls der Übergang des magnetischen Flusses in den Magnetanker erschwert. Zudem entsteht durch die bewegliche Lagerung des Magnetankers im Ankerführungsrohr ein Luftspalt an den jeweiligen Kontaktflächen der beiden Bauteile. Luft weist ebenfalls eine geringe magnetische Permeabilität auf, wodurch der magnetische Fluss geschwächt wird. Die Jochbuchse dient zum Verbessern des Übergangs des magnetischen Flusses, wobei die Jochbuchse vorzugsweise aus magnetisierbarem Material mit hoher magnetischer Permeabilität besteht. Hierdurch wird die dem magnetischen Fluss zur Verfügung stehende Durchgangsfläche vergrößert, so dass er besser in den Magnetanker fließen kann. Jochbuchsen können auch an der Stelle vorgesehen werden, an welcher der magnetische Fluss in den Ventilkern übergeht. Auf diese Weise wird der Magnetanker effektiver von der elektrischen Spule in Bewegung gesetzt und es können kürzere Reaktionszeiten oder höhere Schaltfrequenzen erzielt werden.

Vorteilhafterweise ist ein einstückiges Ankerführungsrohr vorgesehen. Im Vergleich zu einem zweistückigen Ankerführungsrohr müssen hierbei keine Bereiche miteinander verbunden zu werden. Zur Vermeidung von Druckverlusten innerhalb des Schaltmagnetventils muss die Verbindung zwischen den beiden Bereichen druckdicht ausgeführt sein. Daher muss diese Verbindung aufwendig gefertigt werden. Durch die einstückige Ausführung des Ankerführungsrohres können folglich die Fertigungskosten reduziert werden.

Die Erfindung wird vorteilhaft dadurch weitergebildet, dass das Ankerführungsrohr aus nicht magnetisierbarem Material wie austenitischem Stahl oder Messing besteht. Auf diese Weise ist gewährleistet, dass der magnetische Fluss innerhalb des Magnetankers und des Ventilkerns gezielt geleitet wird, so dass dieser den Magnetanker möglichst optimal bewegen kann.

Vorteilhafte Wirkungen lassen sich weiterhin durch eine oder mehrere Jochscheiben zum Leiten des magnetischen Flusses erzielen. Die Jochscheiben sind dabei vorzugsweise benachbart zum Spulenkörper angeordnet, so dass sie vom magnetischen Fluss durchquert werden. Dazu sind diese vorzugsweise aus magnetisierbarem Material mit hoher magnetischer Permeabilität gefertigt, wobei das Material demjenigen des Gehäuses des Schaltmagnetventils entsprechen kann. Die Verwendung von Material, das nicht dem Gehäuse entspricht, kann sich positiv auf die Effektivität des Schaltmagnetventils auswirken. Durch die Jochscheiben wird insbesondere der magnetische Fluss vom Gehäuse durch das Ankerführungsrohr in den Magnetanker und/oder in den Ventilkern verbessert. Die Verwendung der Jochscheiben hat fertigungstechnische Vorteile im Vergleich zu Lösungen, bei denen der magnetische Fluss durch Gehäuseteile geleitet werden müsste. Ohne entsprechende Gehäuseteile oder Jochscheiben würde ein großer Spalt zwischen dem Gehäuse und dem Ankerführungsrohr entstehen, so dass der magnetische Fluss nicht dort hingelangen und das Schaltmagnetventil seine Wirkung nicht erfüllen könnte.

Das Schaltmagnetventil weist gemäß eines weiteren Aspektes weiterhin eine Feder zum Rückstellen des Magnetankers auf, wobei die Feder im wesentlichen außerhalb des Bereiches des magnetischen Flusses angeordnet ist. Durch die Anordnung der Feder außerhalb des Wirkbereichs des magnetischen Flusses wird dieser durch die Feder nicht gestört, so dass das Magnetfeld der Spule ohne größere Verluste auf den Magnetanker wirken kann. Die Dimensionen der Spule können somit klein gehalten werden, wodurch Bauraum eingespart werden kann. Gleichzeitig erfährt der magnetische Fluss keine Schwächung, so dass dieser effektiver für die Betätigung des Magnetankers verwendet wird.

Das erfindungsgemäße Schaltmagnetventil wird anhand der folgenden Figuren exemplarisch beschreiben. Es zeigen:
- Figur 1: eine Schnittdarstellung eines ersten Ausführungsbeispiels des erfindungsgemäßen Schaltmagnetventils in der geöffneten Stellung,
- Figur 2: eine Schnittdarstellung des in Fig. 1 dargestellten erfindungsgemäßen Schaltmagnetventils in der geschlossenen Stellung,
- Figur 3: eine Schnittdarstellung eines zweiten Ausführungsbeispiels des erfindungsgemäßen Schaltmagnetventils in der geöffneten Stellung,
- Figur 4: eine Schnittdarstellung eines dritten Ausführungsbeispiels des erfindungsgemäßen Schaltmagnetventils in der geöffneten Stellung.

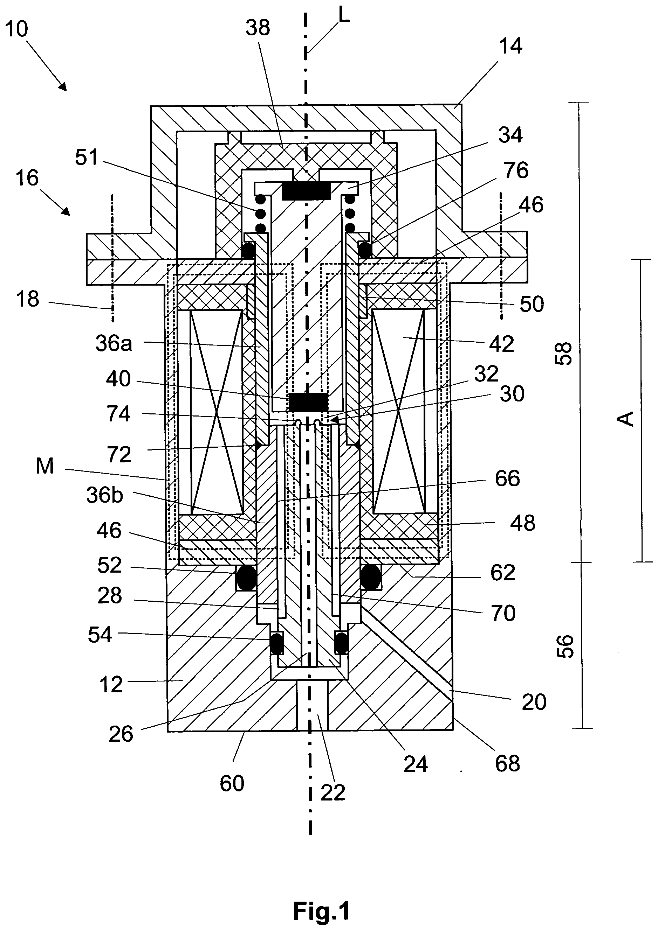

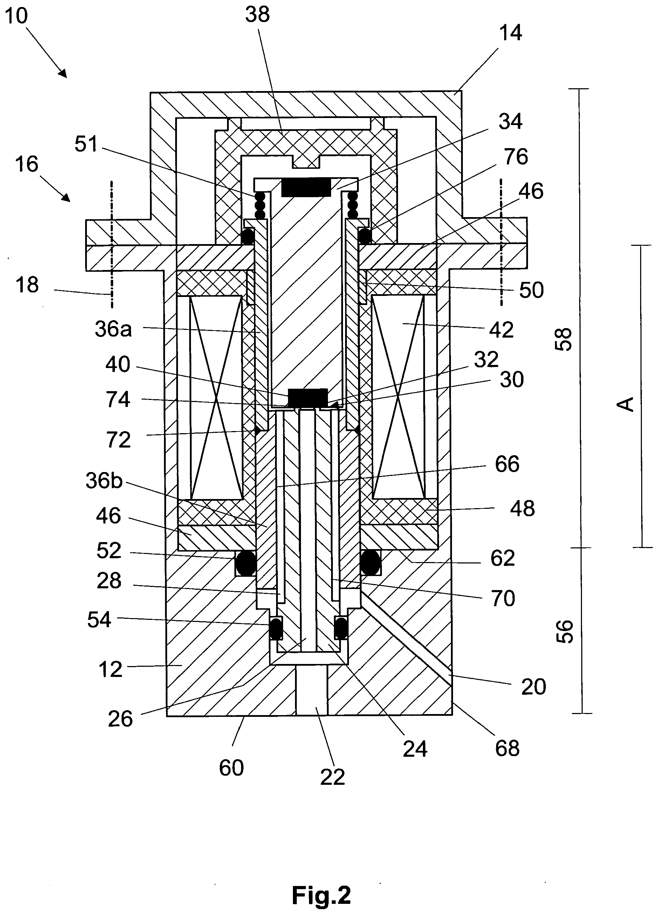

Das in den Figuren 1 und 2 dargestellte Schaltmagnetventil 10 umfasst ein vorzugsweise aus magnetisierbarem Material wie Eisen bestehendes Gehäuse 12, welches durch einen Deckel oder Bügel 14 wahlweise geöffnet werden kann. Der Bügel 14 ist im dargestellten Beispiel über eine Flanschverbindung 16 mit dem Gehäuse 12 verbunden, wobei als Befestigungsmittel Schrauben 18 eingesetzt werden. Andere Befestigungsformen des Bügels 14 am Gehäuse 12 sind möglich. Das Gehäuse 12 weist einen ersten Kanal 20 und einen zweiten Kanal 22 zum Einleiten von Druckluft in das Innere oder zum Herausleiten der Druckluft aus dem Inneren des Schaltmagnetventils 10 auf. Im Inneren des Gehäuses 12 ist ein Ventilkern 24 angeordnet, der mit dem ersten und zweiten Kanal 20, 22 kommuniziert. Hierzu weist der Ventilkern 24 eine Bohrung 26 auf, zusätzlich befinden sich auf dem Ventilkern 24 eine oder mehrere Ausnehmungen 28, die einen Strömungskanal 28 bilden, durch welchen die Druckluft in Richtung eines Ventilsitzes 30 geleitet werden kann.

Im Anschluss an den Ventilkern 24 ist ein axial verstellbarer Magnetanker 34 vorgesehen, welcher in einem zweiteiligen Ankerführungsrohr 36, bestehend aus einem ersten Bereich 36a und einem zweiten Bereich 36b, bewegbar angeordnet und von diesem geführt wird. Der Magnetanker 34 kann zwischen zwei Endstellungen verstellt werden, wobei die erste Endstellung in Figur 1 und die zweite Endstellung in Figur 2 dargestellt ist, und in welcher der Magnetanker 34 gegen ein Verschlussstück 38 anschlägt.

In der zweiten Endstellung, welche in Figur 2 dargestellt ist, schlägt der Magnetanker 34 gegen den Ventilkern 24 an. In dieser Stellung dichtet der Magnetanker 34 den Ventilkern 24 luftdicht ab, wozu der Magnetanker 34 an dem Ende, mit welchem er mit dem Ventilkern 24 in Kontakt steht, einen Dichtungsabschnitt 40 aufweist.

Zur Betätigung des Magnetankers 34 ist eine elektrische Spule 42 vorgesehen, die auf einem Spulenkörper 48 gewickelt ist. Weiterhin sind Jochscheiben 46 an den in Bezug auf eine Längsachse L des Schaltmagnetventils oberen und unteren Enden des Spulenkörpers 48 vorgesehen. Die Jochscheiben 46 weisen vorzugsweise eine gute magnetische Permeabilität auf, so dass der magnetische Fluss diese gut durchqueren und in den Magnetanker 34 und den Ventilkern 24 geleitet werden kann.

Zum Betreiben der Spule 42 ist diese mit einer nicht dargestellten Stromquelle verbunden. Im stromlosen Zustand wird der Magnetanker 34 mit Hilfe einer Feder gegen das Verschlussstück 38 und damit in seine erste Endstellung vorgespannt (vgl. Fig. 1). Zur Verbesserung des Durchgangs des magnetischen Flusses durch den nicht magnetisierbaren Bereich des Ankerführungsrohres 36 sind im dargestellten Beispiel Jochbuchsen 50 am in Bezug auf die Längsachse L des Schaltmagnetventils 10 oberen Ende des Spulenkörpers 48 eingesetzt. Das Ankerführungsrohr 36, das Verschlussstück 38 und der Ventilkern 24 bilden einen druckdichten Medienraum. Das Verschlussstück 38 dichtet den druckdichten Medienraum in Richtung des Bügels 14 mittels der dritten Dichtung 76 ab, während eine erste und eine zweite Dichtung 52 und 54, die beispielsweise als O-Ringdichtungen ausgeführt werden können, den Druckraum gegenüber dem Gehäuse 12 abdichten.

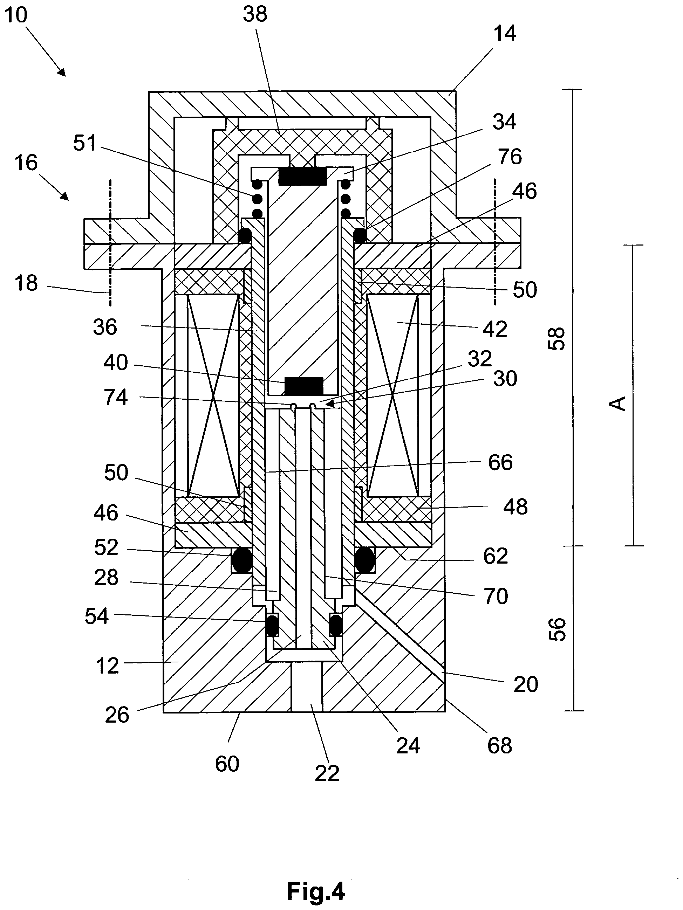

Das in den Figuren 1 und 2 dargestellte Ankerführungsrohr 36 besteht aus zwei Bereichen 36a und 36b, kann aber auch einstückig (vgl. Fig. 4) sein oder mehr als zwei Bereiche aufweisen. Im Bereich 36a, in welchem das Ankerführungsrohr 36 im Wesentlichen den Magnetanker 34 umfasst, ist zumindest abschnittsweise ein nicht magnetisierbares Material, z.B. austenitischer Stahl vorgesehen, alternativ kann auch Messing verwendet werden. Der Bereich 36b des Ankerführungsrohrs 36, welcher den Ventilkern 24 umgibt, besteht aus einem Material mit guter magnetischer Permeabilität, beispielsweise aus einem ferritischen Stahl. Wie oben bereits erwähnt, bildet das Ankerführungsrohr zusammen mit dem Verschlussstück 38 und dem Ventilkern 24 einen druckdichten Mediumraum. Um die Druckdichtigkeit zu gewährleisten, müssen die beiden Bereiche 36a und 36b des Ankerführungsrohres 36 entsprechend miteinander verbunden sein, etwa durch eine Schweißnaht 72.

Das Schaltmagnetventil 10 kann in zwei Abschnitte 56 und 58 unterteilt werden, wobei sich der erste Abschnitt 56 von einer unteren Oberfläche 60 des Gehäuses 12 bis zur unteren Oberfläche 62 der Spule 42 erstreckt. Der zweite Abschnitt 58 erstreckt sich von dieser unteren Oberfläche 62 der Spule 42 bis zum Bügel 14 des Gehäuses 12. Dadurch, dass sich der erste und der zweite Kanal 20 und 22 im ersten Abschnitt 56 des Schaltmagnetventils 10 befinden, können die Zu- bzw. Ableitungen für die Druckluft von derselben Seite an das Ventil herangeführt werden, so dass es auch nur von dieser Seite frei zugänglich sein muss. Im dargestellten Beispiel geht der erste Kanal 20 von einer Seitenfläche 68 des Gehäuses 12 aus, jedoch ist es durch eine entsprechende Gestaltung ebenso möglich, den ersten Kanal 20 von der unteren Oberfläche 60 des Gehäuses 12 ausgehen zu lassen. In diesem Fall muss das Schaltmagnetventil 10 nur von einer Seite insbesondere für Druckluftanschlüsse zugänglich sein und kann im übrigen völlig in andere Bauteile integriert sein, wie es bei Vorsteuerventil-Anordnungen häufig der Fall ist.

Der sich im Schaltmagnetventil 10 ausbildende magnetische Fluss ist in Figur 1 durch die Linien M gekennzeichnet. Der magnetische Fluss durchläuft den Abschnitt des Gehäuses, welcher sich benachbart zum Spulenkörper 48 befindet, entlang einer Längsachse L des Magnetschaltventils 10 und anschließend die Jochscheiben 46, welche in Bezug auf die Längsachse L am oberen und unteren Ende des Spulenkörpers 48 angeordnet sind. Innerhalb der Jochscheiben 46 wird der magnetische Fluss in Richtung des Magnetankers 34 bzw. des Ventilkerns 24 gerichtet. Nach Austritt aus den Jochscheiben 46 durchquert er das Ankerführungsrohr und tritt in den Magnetanker 34 und den Ventilkern 24 ein. Der magnetische Fluss ist in sich geschlossen, bildet also einen Magnetkreis. Durch seine maximale Erstreckung in Richtung der Längsachse L wird ein Wirkbereich A, definiert. Um zu verhindern, dass die Feder 51 den magnetischen Fluss stört, ist diese außerhalb des Wirkbereichs A des magnetischen Flusses angeordnet.

Vor Inbetriebnahme des Schaltmagnetventils 10, also im stromlosen Zustand, wird der Magnetanker 34 aufgrund der Vorspannkraft der Feder 51 gegen das Verschlussstück 38 gedrückt. In dieser Stellung, auch als "normally open" bezeichnet, ist der Magnetanker 34 beabstandet vom Ventilkern 24, dichtet diesen also nicht ab (vgl. Fig. 1). Druckluft oder ein anderes Fluid, die beispielsweise über den ersten Kanal 20 in das Schaltmagnetventil 10 eingeleitet wird, kann über den Strömungskanal 28 entlang der Mantelfläche des Ventilkerns 24 in Richtung des Magnetankers 34 strömen. Die Druckluft kann aber auch über Vertiefungen auf einer Innenfläche des Ankerführungsrohrs 36 in Richtung auf den Ventilsitz 30 strömen. Durch den Ventilssitz kann die Luft weiter entlang der Bohrung 26 durch den Ventilkern 24 in Richtung des zweiten Kanals 22 strömen und das Schaltmagnetventil 10 über diesen verlassen. Die Strömungsrichtung der Druckluft kann auch entgegengesetzt sein.

Wird die Spule nun mit Strom beaufschlagt, baut sich ein Magnetfeld auf, so dass sich der Magnetanker 34 in Richtung des Ventilkerns 24 verschiebt. Nachdem der Magnetanker 34 eine gewisse Distanz entgegen der Vorspannkraft der Feder 51 zurückgelegt hat, kommt er auf dem Ventilkern 24 in einer zweiten Endstellung zur Anlage. Die Kontaktfläche des Magnetankers 34 mit dem Ventilkern 24 wird zumindest teilweise durch den Dichtungsabschnitt 40 gebildet, welcher so dimensioniert ist, dass dieser die Bohrung 26 im Ventilkern 24 überdeckt und luftdicht abschließt. Zusätzlich kann am Ventilsitz 30 eine Dichtkontur, etwa in Form von Dichtlippen 74, vorgesehen werden, die in der zweiten Endstellung in den Dichtabschnitt 40 eindringt. In der zweiten Endstellung des Magnetankers 34 wird der Luftstrom durch das Schaltmagnetventil 10 unterbrochen.

Wird der Stromfluss durch die Spule 42 unterbrochen, baut sich das Magnetfeld ab, und der Magnetanker 34 wird aufgrund der Vorspannkraft der Feder 51 wieder in die erste Endstellung zurückgeschoben. Der Luftstrom durch das Ventil wird also wieder freigegeben.

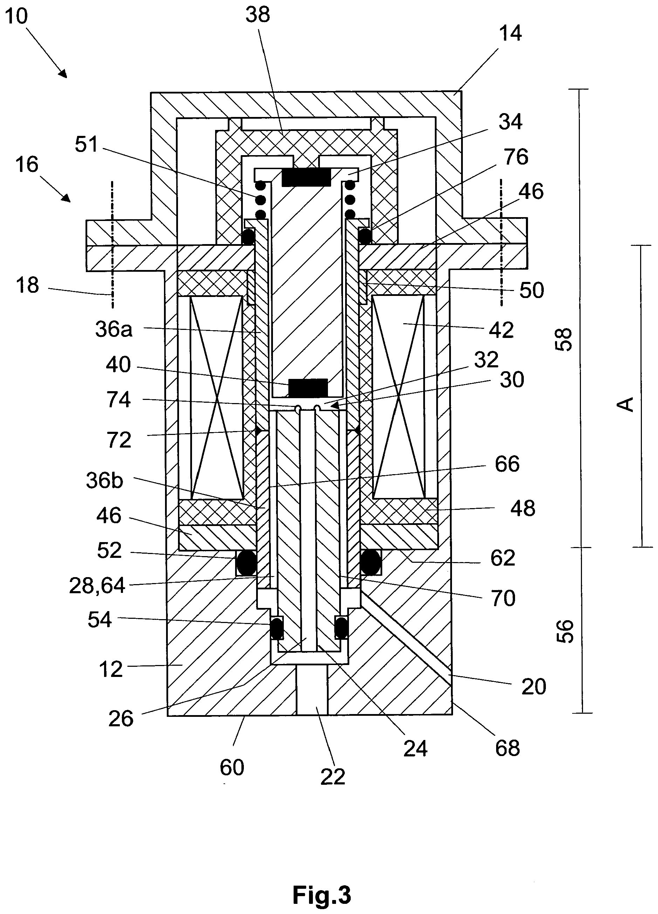

In Figur 3 ist ein zweites Ausführungsbeispiel des erfindungsgemäßen Schaltmagnetventils 10 dargestellt. Im Gegensatz zum in den Figuren 1 und 2 gezeigten Ausführungsbeispiel befinden sich die Ausnehmungen 28 nicht auf der Mantelfläche 70 des Ventilkerns 24, sondern sind als Vertiefungen 64 auf der Innenfläche 66 des Ankerführungsrohres 36 ausgebildet.

In Figur 4 ist ein drittes Ausführungsbeispiel 10 des erfindungsgemäßen Schaltmagnetventils gezeigt. In diesem Ausführungsbeispiel ist das Ankerführungsrohr 36 einstückig ausgeführt, die Ausnehmungen 28 befinden sich auf der Innenfläche 66 des Ventilkerns 24. Zur Vergrößerung der Durchgangsfläche des magnetischen Flusses in den Ventilkern 24 ist am unteren Ende des Spulenkörpers 48 eine weitere Jochbuchse 50 vorgesehen.

## Patentansprüche

1. Schaltmagnetventil, insbesondere als Vorsteuerventil zum Erzeugen und Steuern eines Steuerdrucks in einem Druckluftbremssystem eines Fahrzeugs, umfassend
- einen ersten Kanal (20) zum Zu- oder Abführen von Druckluft in das oder aus dem Schaltmagnetventil,
- einen zweiten Kanal (22) zum Zu- oder Abführen von Druckluft in das oder aus dem Schaltmagnetventil,
- eine Ventilkammer (32) umfassend einen Ventilsitz (30) zum wahlweisen Freigeben und Unterbrechen des Druckluftstroms, und
- einen Ventilkern (24) mit einer Bohrung (26) zum Durchleiten der Druckluft und einer Mantelfläche (70),
**dadurch gekennzeichnet, dass** die Ventilkammer (32) einen Strömungskanal (28) für Druckluft benachbart zur Mantelfläche (70) des Ventilkerns (24) aufweist.

2. Schaltmagnetventil nach Anspruch 1,
**dadurch gekennzeichnet, dass** der Strömungskanal (28) durch mindestens eine Ausnehmung (28) auf der Mantelfläche (70) des Ventilkerns (24) gebildet ist.

3. Schaltmagnetventil nach Anspruch 2,
**dadurch gekennzeichnet, dass** die Ausnehmung eine axial an dem Ventilkern (24) verlaufende Nut ist.

4. Schaltmagnetventil nach einem der Ansprüche 1 bis 3,
welches ein Ankerführungsrohr (36) mit einer Innenfläche (66) aufweist,
**dadurch gekennzeichnet, dass** der Strömungskanal (28) durch mindestens eine Vertiefung (64) in der Innenfläche (66) des Ankerführungsrohres (36) ausgebildet ist.

5. Schaltmagnetventil nach mindestens einem der vorstehenden Ansprüche, wobei das Schaltmagnetventil in einen ersten und einen zweiten Abschnitt (56, 58) unterteilbar ist,
**dadurch gekennzeichnet, dass** der erste und der zweite Kanal (20, 22) im selben Abschnitt, insbesondere im ersten Abschnitt (56) des Schaltmagnetventils benachbart zueinander angeordnet sind.

6. Schaltmagnetventil, nach einem der vorherigen Ansprüche, welches einen axial verstellbaren Magnetanker (34) und eine elektrische Spule zum Verstellen des Magnetankers (34) umfasst,
**gekennzeichnet durch** ein Ankerführungsrohr (36) zum Führen des Magnetankers (34), das aus einem ersten und einem zweiten oder weiteren Materialien besteht.

7. Schaltmagnetventil nach Anspruch 6,
**dadurch gekennzeichnet, dass** das erste Material zumindest abschnittsweise im wesentlichen im Bereich des Magnetankers (34) und das zweite Material im wesentlichen im Bereich des Ventilkerns (24) angeordnet sind.

8. Schaltmagnetventil nach Anspruch 6 oder 7,
**dadurch gekennzeichnet, dass** als erstes Material ein austenitischer Stahl oder Messing zur Vermeidung eines magnetischen Kurzschlusses und als zweites Material ein ferritischer Stahl zur Ausbildung eines Magnetkreises innerhalb des Schaltmagnetventils vorgesehen sind.

9. Schaltmagnetventil nach einem der Ansprüche 6 bis 8,
**gekennzeichnet durch** mindestens eine Jochbuchse (50) zum Verstärken des magnetischen Flusses.

10. Schaltmagnetventil nach Anspruch 6,
**gekennzeichnet durch** ein einstückiges Ankerführungsrohr.

11. Schaltmagnetventil nach Anspruch 10,
**dadurch gekennzeichnet, dass** das Ankerführungsrohr aus nicht magnetisierbarem Material wie austenitischem Stahl oder Messing besteht.

12. Schaltmagnetventil nach einem der vorherigen Ansprüche,
**gekennzeichnet durch** eine oder mehrere Jochscheiben (46) zum Leiten des magnetischen Flusses.

13. Schaltmagnetventil, nach einem der vorstehenden Ansprüche, welches eine Feder (51) zum Rückstellen des Magnetankers (34) aufweist,
**dadurch gekennzeichnet, dass** die Feder (51) im wesentlichen außerhalb des magnetischen Flusses (A) angeordnet ist.

## Claims

1. Switching magnet valve, in particular as a pilot control valve for generating and controlling a control pressure in a compressed air brake system of a vehicle, comprising
- a first duct (20) for feeding in or discharging compressed air into or from the switching magnet valve,
- a second duct (22) for feeding in or discharging compressed air into or from the switching magnet valve,
- a valve chamber (32) comprising a valve seat (30) for optionally releasing and interrupting the compressed air stream, and
- a valve core (24) with a drilled hole (26) for conducting through the compressed air and a lateral face (70),
**characterized in that** the valve chamber (32) has a flow duct (28) for compressed air adjacent to the lateral face (70) of the valve core (24).

2. Switching magnet valve according to Claim 1,
**characterized in that** the flow duct (28) is formed by at least one recess (28) on the lateral face (70) of the valve core (24).

3. Switching magnet valve according to Claim 2,
**characterized in that** the recess is a groove which runs axially on the valve core (24).

4. Switching magnet valve according to one of Claims 1 to 3,
which has an anchor guide tube (36) with an inner face (66),
**characterized in that** the flow duct (28) is formed via at least one depression (64) in the inner face (66) of the armature guide tube (36).

5. Switching magnet valve according to at least one of the preceding claims, wherein the switching magnet valve can be divided into a first and a second section (56, 58), **characterized in that** the first and second ducts (20, 22) are arranged adjacent to one another in the same section, in particular in the first section (56) of the switching magnet valve.

6. Switching magnet valve according to one of the preceding claims, which comprises an axially adjustable magnet armature (34) and an electrical coil for adjusting the magnet armature (34),
**characterized by** an armature guide tube (36) for guiding the magnet armature (34), which armature guide tube (36) is composed of a first material and a second material or further materials.

7. Switching magnet valve according to Claim 6,
**characterized in that** the first material is arranged, at least in sections, essentially in the region of the magnet armature (34), and the second material essentially in the region of the valve core (24).

8. Switching magnet valve according to Claim 6 or 7,
**characterized in that** an austenitic steel or brass is provided as a first material in order to avoid a magnetic short-circuit, and as a second material a ferritic steel is provided in order to form a magnetic circuit within the switching magnet valve.

9. Switching magnet valve according to one of Claims 6 to 8,
**characterized by** at least one yoke bushing (50) for amplifying the magnetic flux.

10. Switching magnet valve according to Claim 6,
**characterized by** a single-piece armature guiding tube.

11. Switching magnet valve according to Claim 10,
**characterized in that** the armature guiding tube is composed of non-magnetizable material such as austenitic steel or brass.

12. Switching magnet valve according to one of the preceding claims,
**characterized by** one or more yoke discs (46) for conducting the magnetic flux.

13. Switching magnet valve according to one of the preceding claims, which has a spring (51) for resetting the magnet armature (34),
**characterized in that** the spring (51) is arranged essentially outside the magnetic flux (A).

## Revendications

1. Électrovanne de commutation, notamment sous forme de vanne pilote destinée à générer et à commander une pression de commande dans un système de freinage à air comprimé d'un véhicule, comprenant
- un premier conduit (20) destiné à l'introduction ou à l'évacuation d'air comprimé dans ou hors de l'électrovanne de commutation,
- un deuxième conduit (22) destiné à l'introduction ou à l'évacuation d'air comprimé dans ou hors de l'électrovanne de commutation,
- une chambre de vanne (32) comprenant un siège de vanne (30) destiné à libérer et à interrompre sélectivement le flux d'air comprimé, et
- un noyau de vanne (24) comportant un alésage (26) destiné à acheminer l'air comprimé et une surface d'enveloppe (70),
**caractérisée en ce que** la chambre de vanne (32) comporte un conduit d'écoulement (28) pour l'air comprimé au voisinage de la surface d'enveloppe (70) du noyau de soupape (24).

2. Électrovanne de commutation selon la revendication 1,
**caractérisée en ce que** le conduit d'écoulement (28) est formé par au moins un évidement (28) sur la surface d'enveloppe (70) du noyau de soupape (24).

3. Électrovanne de commutation selon la revendication 2,
**caractérisée en ce que** l'évidement est une encoche s'étendant axialement sur le noyau de vanne (24).

4. Électrovanne de commutation selon l'une quelconque des revendications 1 à 3,
comportant un tube de guidage d'armature (36) muni d'une surface interne (66),
**caractérisée en ce que** le conduit d'écoulement (28) est réalisé par au moins un creux (64) ménagé dans la surface interne (66) du tube de guidage d'armature (36).

5. Électrovanne de commutation selon au moins l'une des revendications précédentes, dans laquelle l'électrovanne de commutation peut être subdivisée en des première et deuxième sections (56, 58),
**caractérisée en ce que** les premier et deuxième conduits (20, 22) sont disposés côte à côte dans la même section, notamment dans la première section (56) de l'électrovanne de commutation.

6. Électrovanne de commutation selon l'une quelconque des revendications précédentes, comprenant une armature magnétique ajustable (34) et une bobine électrique destinée à ajuster l'armature magnétique (34),
**caractérisée par** un tube de guidage d'armature (36) destiné à guider l'armature magnétique (34), qui est constitué de premier et deuxième matériaux ou d'autres matériaux.

7. Électrovanne de commutation selon la revendication 6,
**caractérisée** en ce le premier matériau est au moins par sections disposé sensiblement dans la région de l'armature magnétique (34) et en ce que le deuxième matériau est disposé sensiblement dans la région du noyau de vanne (24).

8. Électrovanne de commutation selon la revendication 6 ou 7,
**caractérisé en ce que** de l'acier inoxydable ou du laiton est prévu en tant que premier matériau afin d'éviter un court-circuit magnétique et **en ce qu'**un acier ferritique est prévu en tant que deuxième matériau afin de créer un circuit magnétique à l'intérieur de l'électrovanne de commutation.

9. Électrovanne selon l'une quelconque des revendications 6 à 8,
**caractérisée par** au moins une douille de culasse (50) destinée à amplifier le flux magnétique.

10. Électrovanne de commutation selon la revendication 6,
**caractérisée par** un tube de guidage d'armature d'un seul tenant.

11. Électrovanne selon la revendication 10,
**caractérisée en ce que** le tube de guidage d'armature est constitué d'un matériau non magnétisable tel que l'acier inoxydable ou le laiton.

12. Électrovanne de commutation selon l'une quelconque des revendications précédentes,
**caractérisé par** un ou plusieurs disques de culasse (46) destinés à conduire le flux magnétique.

13. Électrovanne de commutation selon l'une quelconque des revendications précédentes, comportant un ressort (51) exerçant une force de rappel sur l'armature magnétique (34),
**caractérisée en ce que** le ressort (51) est disposé sensiblement à l'extérieur du flux magnétique (A).
